# NEUE EUROPÄISCHE PATENTSCHRIFT

(11) **EP 2 643 129 B2**
(45) Veröffentlichungstag und Bekanntmachung des Hinweises auf die Entscheidung über den Einspruch: **10.07.2024**
(45) Hinweis auf die Patenterteilung: 01.01.2020
(21) Anmeldenummer: 11794027.0
(22) Anmeldetag: 22.11.2011
(51) Int. Cl.: B25J 9/16, G01B 5/008, G01B 21/04, G05B 19/404

(54) **VERFAHREN ZUR STEUERUNG EINES KOORDINATENMESSGERÄTS**
METHOD FOR CONTROLLING A CO-ORDINATE MEASURING DEVICE
PROCÉDÉ DE COMMANDE D'UN APPAREIL DE MESURE DE COORDONNÉES

(30) Priorität: 26.11.2010 DE 102010052503
(43) Veröffentlichungstag der Anmeldung: 02.10.2013
(73) Patentinhaber: WENZEL Präzision GmbH, 97859 Wiesthal (DE)
(72) Erfinder: MÜHLBERGER, Klaus, 91171 Greding (DE); LUDWIG, Joseph, 37154 Northeim (DE)
(74) Vertreter: Weidner Stern Jeschke
(86) Internationale Anmeldenummer: PCT/EP2011/005882
(87) Internationale Veröffentlichungsnummer: WO 2012/069182

(56) Entgegenhaltungen:
- EP-A2- 0 974 882
- WO-A1-2007/122362
- WO-A1-2009/001165
- WO-A1-2009/001165
- DE-A1- 19 614 883
- DE-A1- 3 011 003
- DE-A1- 3 729 161
- DE-A1- 3 936 465
- US-A1- 2008 257 023
- US-A1- 2010 299 094

## Beschreibung

Die vorliegende Erfindung betrifft ein Verfahren zur Steuerung eines Koordinatenmessgeräts.

Koordinatenmessgeräte werden zur Aufnahme der Raumkoordinaten von Messpunkten auf der Oberfläche von Messobjekten eingesetzt. Hierfür weist ein Koordinatenmessgerät (KMG) eine Grundstruktur zur Aufnahme des Messobjekts auf sowie eine Mehrzahl von antreibbaren Achsen, wodurch ein Tastkopf des Koordinatenmessgeräts innerhalb eines Messvolumens in beliebige Positionen relativ zum Messobjekt gebracht werden kann. Insbesondere kann ein Koordinatenmessgerät drei aufeinander aufbauende, zueinander senkrechte Achsen zur translatorischen Verschiebung des Tastkopfs in den drei Raumrichtungen umfassen. Der Tastkopf kann einen Taster zur berührenden Antastung der Werkstückoberfläche aufnehmen oder beispielsweise einen optischen Sensor zur berührungslosen Antastung der Werkstückoberfläche. Die Achsen des Koordinatenmessgeräts weisen Maßstäbe und Positionsgeber auf, aus deren Signalen eine Steuerungseinrichtung die Position des Tastkopfs sowie zusammen mit den Signalen des Tasters bzw. Sensors die Koordinaten eines angetasteten Messpunkts auf der Objektoberfläche ermittelt. Das Koordinatenmessgerät kann auch eine oder mehrere Drehachsen aufweisen, um das Werkstück relativ zum Taster bzw. Sensor durch eine rotatorische Bewegung auszurichten.

Zur Antastung der Werkstückoberfläche sind sowohl schaltende als auch messende Tastköpfe bekannt. Ein schaltender Tastkopf gibt im Moment der Berührung der Werkstückoberfläche ein Signal ab. Aus den zum gleichen Zeitpunkt ausgelesenen Signalen der Positionsgeber der Achsen des Koordinatenmessgeräts sowie mit Hilfe der bekannten Länge und Orientierung des Tasters können die Koordinaten des angetasteten Punkts auf der Werkstückoberfläche berechnet werden. Bei einem messenden Tastkopf wird die Position der Werkstückoberfläche relativ zum Tastkopf gemessen, indem beispielsweise ein Taster in Berührung mit der Werkstückoberfläche gebracht und der Tastkopf innerhalb eines Messbereichs in Richtung auf die Werkstückoberfläche verfahren wird. Aus der Auslenkung des Tasters, die in Abhängigkeit von der durch die Positionsgeber der Achsen bestimmten Position des Tastkopfs aufgenommen wird, können ebenfalls die Koordinaten des angetasteten Punkts auf der Werkstückoberfläche berechnet werden. Ein messender Tastkopf kann auch mit einem berührungslosen, insbesondere optischen Sensor ausgebildet sein, der beispielsweise die Bestimmung des Abstands eines Messpunkts auf der Objektoberfläche gestattet. In diesem Fall können aus dem gemessenen Abstand zum Tastkopf und der bekannten Ausrichtung des Sensors zusammen mit den Daten der Positionsgeber der Achsen des Koordinatenmessgeräts die Koordinaten des Messpunkts berechnet werden, ohne dass bei der Antastung eine Bewegung des Tastkopfs stattfinden muss.

Aufgrund zunehmender Anforderungen an die Vollständigkeit und die Geschwindigkeit der Aufnahme der Werkstückoberfläche hat sich anstelle der Aufnahme von Einzelpunkten eine kontinuierliche Messpunktaufnahme entlang einer Messlinie auf der Werkstückoberfläche als vorteilhaft erwiesen; ein derartiges Messverfahren wird auch als "Scanning" oder "Scannen" bezeichnet. Hierfür sind insbesondere messende Tastköpfe geeignet. Dabei wird der Taster in Berührung mit der Werkstückoberfläche gehalten und entlang der Messlinie bewegt, wobei kontinuierlich oder in einem kurzen Zeittakt Messpunkte aufgenommen werden. Die Koordinaten jedes Messpunkts werden aus der jeweiligen Auslenkung des Tastkopfs und den dazugehörigen Daten der Positionsgeber der Achsen des Koordinatenmessgeräts berechnet. Ein Scannen ist auch mit berührungslosen, insbesondere optischen Sensoren möglich.

Liegen keine Daten der zu scannenden Kontur vor, so kann aus der Richtung eines bereits vermessenen Teils der Messlinie die Richtung der weiteren Bewegung des Tastkopfs ermittelt werden. Die Geschwindigkeit der Scanbewegung ist dabei jedoch durch den begrenzten Messbereich des Tastkopfs und durch die Trägheit der mechanischen Komponenten des Koordinatenmessgeräts eingeschränkt. Wenn bereits Soll-Daten der zu scannenden Kontur vorliegen, so kann der Tastkopf mit einer höheren Geschwindigkeit auf einer derart vorbestimmten Bahn geführt werden, dass der Taster in dauerndem Kontakt mit der Werkstückoberfläche verbleibt. Die tatsächliche Werkstückkontur wird dann aus der Auslenkung des Tastkopfs bestimmt. Dabei ist es notwendig, den zulässigen Messbereich des Tastkopfs zu überwachen, da bei Abweichungen der Ist- von der Sollkontur, die größer als der Messbereich sind oder bei denen sogar der Taster von der Werkstückoberfläche abhebt, keine Messung möglich ist. Das gleiche gilt, wenn aufgrund von Ungenauigkeiten der Positionierung des Tastkopfs die tatsächliche Position des Tastkopfs von der Sollposition abweicht.

Fehler in der Positionierung des Tastkopfs können sowohl durch statische, geometriebedingte Abweichungen, beispielsweise Geradheits- oder Winkelabweichungen der Achsen, als auch durch dynamische Verformungen, die insbesondere durch Beschleunigung und Abbremsung des Tastkopfs und der mechanischen Strukturen des Koordinatenmessgeräts verursacht werden, entstehen. Die dynamisch bedingten Abweichungen spielen aufgrund der zunehmenden Messgeschwindigkeiten und der zunehmend verbreiteten Leichtbauweise von Koordinatenmessgeräten eine zunehmend größere Rolle und können die statischen Abweichungen deutlich übersteigen.

Es ist bekannt, die statischen, geometriebedingten Abweichungen eines Koordinatenmessgeräts bei einer Kalibrierung, die beispielsweise bei der ersten Inbetriebnahme des Koordinatenmessgeräts durchgeführt wird, zu messen und bei einer Messung eines Messobjekts die aufgenommenen Koordinatenwerte entsprechend zu korrigieren. Änderungen der geometriebedingten Abweichungen des Koordinatenmessgeräts, die sich nach der Kalibrierung beispielsweise durch Verschleiß der Führungen oder durch Temperatureffekte ergeben, sind auf diese Weise jedoch nicht erfassbar.

In dem Artikel von Kunzmann et al. in John A. Bosch, Coordinate Measuring Machines and Systems, New York 1995, Seiten 279 bis 300, wird eine rechnerische Korrektur der von einem Koordinatenmessgerät aufgenommenen Koordinatenwerte beschrieben. Dabei kann eine Aufnahme der kinematischen Fehler der drei Achsen des Koordinatenmessgeräts in Echtzeit erfolgen, um Veränderungen der geometrischen Abweichungen zu erfassen. Abweichungen der Ist- von der Sollposition des Tastkopfs werden hierdurch nicht vermieden.

Gemäß DE 195 18 268 A1 wird das elastische Biegeverhalten eines Koordinatenmessgeräts durch Antastung eines Prüfkörpers für mehrere Stellungen des Tasters im Messbereich bestimmt. Aus den Messwerten für das Biegeverhalten werden Korrekturwerte berechnet und gespeichert. Bei der Vermessung unbekannter Werkstücke werden die gespeicherten Korrekturwerte von der Messsoftware des Koordinatenmessgeräts mit den beispielsweise von den Maßstäben gelieferten Koordinatenmesswerten und der eingestellten Messkraft verrechnet.

Aus DE 10 2005 040 223 A1 ist es bekannt, Schwingbewegungen des Tastkopfs durch einen aktiven Schwingungstilger zu unterdrücken. Der Schwingungstilger beinhaltet eine eigenständig bewegbare Masse und eine Regelschaltung, die die Masse gegenläufig zu der Schwingbewegung bewegt. Hiermit sind jedoch ein erhöhter konstruktiver Aufwand und eine unerwünschte Zunahme der gesamten bewegten Masse der aufeinander aufbauenden Achsen des Koordinatenmessgeräts verbunden. Zudem können hiermit nicht alle auftretenden dynamischen Verformungen beseitigt werden.

Gemäß DE 43 42 312 A1 ist es vorgesehen, dass der zeitliche Verlauf von Störschwingungen bei einem Koordinatenmessgerät mit Hilfe von Beschleunigungssensoren aufgenommen wird. Die Messwerte der Sensoren werden mit gespeicherten Korrekturparametern verrechnet, um schwingungsbedingte Messfehler zu korrigieren. In WO 2009/001165 A1 wird ein Verfahren zur rechnerischen Korrektur von durch dynamische Verformungen bedingten Messfehlern bei einem Koordinatenmessgerät offenbart. Dabei wird in einem Kalibrierlauf die dynamische Verformung des Koordinatenmessgeräts durch einen Laser-Sensor, der in einer bewegten Achse des Koordinatenmessgeräts angeordnet ist, aufgenommen und mit den Versorgungsströmen der Antriebe der Achsen korreliert. Hieraus wird ein Modell ermittelt, das die rechnerische Korrektur von Messfehlern gestattet, die durch die dynamische Verformung der Achsen des Koordinatenmessgeräts entstehen.

Bei den vorgenannten Verfahren wird eine durch dynamische Verformung des Koordinatenmessgeräts bedingte Positionsabweichung des Tastkopfs toleriert; die hierdurch entstehenden Messfehler werden rechnerisch korrigiert. Mit zunehmenden Verfahr-, Antast- und Scangeschwindigkeiten der Koordinatenmessgeräte können die dynamischen Verformungen jedoch ohne Weiteres den Messbereich des Tastkopfs überschreiten. Dadurch kann beispielsweise beim Scannen nach Solldaten eine Positionierung des Tastkopfs an einer räumlichen Position erfolgen, die von der durch die Solldaten vorgegebenen Position derart abweicht, dass selbst dann, wenn die tatsächliche Werkstückoberfläche der Sollkontur entspricht, keine oder zumindest keine genaue Antastung möglich ist. Auch durch eine entsprechende Korrektur eines eventuell aufgenommenen Koordinatenwerts ist dann keine genaue Koordinatenmessung erzielbar. Entsprechendes gilt für berührungslose Taster, die in der Regel ebenfalls einen begrenzten Messbereich aufweisen.

In der gattungsfremden Offenlegungsschrift DE 196 30 205 A1 wird zur Verbesserung der Bearbeitungsgenauigkeit einer Werkzeugmaschine vorgeschlagen, dass ein Optikblock einen strahlungsemittierenden Sender aufweist, dessen Lichtstrahl auf einen auf einem Querschlitten angeordneten ortsauflösenden Empfänger gerichtet ist. Abweichungen des Querschlittens zum Lichtstrahl werden gemessen und in der Maschinensteuerung ausgewertet, die Stellsignale für den Querschlittenantrieb zur Korrektur der Abweichungen ausgibt.

In DE 10 2007 004 971 A1 ist ein Verfahren zur Korrektur eines Positionierungssystems offenbart, wobei durch Messmittel, beispielsweise Laserinterferometer oder geometrische Normale, Abweichungen der Systemgeometrie ermittelt werden und aus den Abweichungen Korrekturwerte für das Positionierungssystem ermittelt werden. Durch Einarbeiten der zuvor ermittelten Korrekturwerte, die über einen längeren Zeitraum Gültigkeit haben, in Steuercodes bereits erstellter Programme für Positionierungsfunktionen werden systemspezifische Programme erzeugt.

Gemäß DE 102 57 856 A1 werden bei einem Koordinatenmessgerät ein Tastkopfmesssignal und/oder seine zeitliche Ableitung zur Erfassung von im Tastkopf auftretenden Schwingungen erfasst und als Störgröße in einen Antriebsregelkreis eingekoppelt.

In US 2010/0299094 A1 ist ein Verfahren zur Kompensation eines Fehlers, der durch eine thermische Deformation einer Koordinatenmessmaschine verursacht wird, beschrieben. Dabei wird in einem ersten Schritt ein Modell der thermischen Deformationen und der geometrischen Fehler der Messmaschine aufgestellt. Im zweiten Schritt werden in einem Labor mit kontrollierter Temperatur Messungen bei unterschiedlichen Umgebungstemperaturen durchgeführt, wobei bei jeder eingestellten Umgebungstemperatur mit einem Laser-Interferometer die geometrischen Fehler in Abhängigkeit von der Position gemessen werden. Im dritten Schritt wird hieraus ein 3D-Fehler im Messvolumen ermittelt, der von der jeweiligen Position der drei Achsen und der Betriebstemperatur abhängig ist. Im vierten Schritt erfolgt bei einer beliebigen Position des Messkopfs eine Kompensation des 3D-Fehlers durch Anwendung des Modells.

Die genannten Lösungen sind zur Vermeidung von Positionierungsabweichungen unbefriedigend und sind teilweise mit einem relativ hohen Aufwand verbunden. Es ist die Aufgabe der vorliegenden Erfindung, ein Verfahren zur Steuerung eines Koordinatenmessgeräts anzugeben, das die o. g. Nachteile nicht aufweist.

Diese Aufgabe wird durch ein Verfahren wie in dem unabhängigen Anspruch 1 angegeben gelöst. Bei einem erfindungsgemäßen Verfahren zur Steuerung eines Koordinatenmessgeräts, das eine Mehrzahl von motorisch antreibbaren Achsen aufweist, wird mindestens eine Achse des Koordinatenmessgeräts angetrieben, um den Tastkopf relativ zu einem Messobjekt, d.h. zu einem zu messenden Werkstück, zu bewegen. Die Achsen des Koordinatenmessgeräts können insbesondere kinematisch aufeinander aufbauen und derart antreibbar sein, dass der Tastkopf relativ zu dem Werkstück in den drei Raumrichtungen verschoben werden kann. Die Achsen umfassen jeweils eine Mess- und eine Verschiebeeinrichtung, wobei die Messeinrichtung insbesondere als Maßstab mit einem Positionsgeber ausgebildet sein kann und die Verschiebeeinrichtung beispielsweise eine Geradführung, einen Antrieb und einen Schlitten bzw. eine mechanische Tragstruktur umfassen kann. Der Tastkopf kann zur Aufnahme eines mechanischen Tasters ausgebildet sein, der zur Aufnahme von Messpunkten in Berührung mit einer Oberfläche des Werkstücks gebracht werden kann. Der Tastkopf kann aber auch einen berührungslosen Taster, beispielsweise einen optischen Sensor, tragen. Da der Tastkopf zur Aufnahme der Messpunkte dient, wird der Tastkopf auch als Messkopf bezeichnet. Die genauen Merkmale des erfindungsgemäßen Verfahrens sind im unabhängigen Anspruch 1 definiert.

Weiterhin wird eine Verformung des Koordinatenmessgeräts bei der Bewegung des Koordinatenmessgeräts aufgenommen, insbesondere die durch Einwirkung von statischen und/oder dynamischen Kräften verursachten Geometrieänderungen, ebenso wie beispielsweise durch Verschleiß bzw. durch Temperaturänderungen verursachte Geometrieänderungen. Da der Tastkopf insbesondere an einer Tragstruktur derjenigen Achse angeordnet ist, die auf allen anderen Achsen des Koordinatenmessgeräts aufbaut, wirkt sich eine Verformung einer Achse direkt oder indirekt auf die tatsächliche Raumposition des Tastkopfs aus, die dadurch von der aufgrund der Signale der Positionsgeber ermittelten Raumposition abweichen kann. Die Verformung kann abhängig sein von der Position des Tastkopfs bzw. von der Position der Achsen des Koordinatenmessgeräts. Die Verformung ist insbesondere eine elastische Verformung, beispielsweise eine elastische Durchbiegung oder eine Schwingbewegung eines Bauteils.

In einem nächsten Schritt wird ermittelt, wie sich die gemessene Verformung, die durch einen beliebigen Parameter gemessen worden sein kann, auf die tatsächliche Position des Tastkopfs bzw. des Tasters auswirkt. Wenn der Tastkopf zum Erreichen der Sollposition derart verfahren wird, dass die aufgrund der Signale der Positionsgeber der Achsen bestimmte Raumposition des Tastkopfs mit der Sollposition übereinstimmt, so wird aufgrund der Verformung des Koordinatenmessgeräts die tatsächliche Position des Tastkopfs dennoch von der Sollposition abweichen. Zur Zuordnung der verformungsbedingten Abweichung der Ist- von der Sollposition zu der gemessenen Verformung kann beispielsweise ein geometrisches Modell des Koordinatenmessgeräts verwendet werden. Mit Hilfe des Modells wird dann aufgrund der gemessenen Verformung die entsprechende Abweichung bezüglich des Tastkopfs bzw., mit Hilfe der bekannten Daten des Tasters, bezüglich des Tasters berechnet. Im einfachsten Fall kann bereits die Verformung als eine geometrische Abweichung gemessen werden, die unmittelbar oder lediglich nach einer Skalierung die entsprechende Abweichung der Ist- von der Sollposition des Tastkopfs bzw. des Tasters angibt. Im Allgemeinen ist es nicht notwendig, dass der Tastkopf an der Sollposition zum Stillstand kommt; die Sollposition kann beispielsweise einen nächsten Messpunkt betreffen, aber auch einen Zwischenpunkt auf einer Bahn zum nächsten Messpunkt oder auch einen Punkt auf einer beim Scannen abzufahrenden Messlinie.

Erfindungsgemäß wird ein Antrieb der mindestens einen Achse des Koordinatenmessgeräts zur Kompensation der Abweichung der Ist- von der Sollposition des Tastkopfs angesteuert. Insbesondere wird der Antrieb zur Kompensation der Positionsabweichung des Tasters, beispielsweise einer Tastkugel eines mechanischen Tasters oder des Antastbereichs eines optischen Tasters, angesteuert. Der Antrieb der Achse wird daher aufgrund der ermittelten Abweichung derart betrieben, dass die tatsächlich erreichte Position in Richtung der Achse mit der Sollposition übereinstimmt. Hierfür kann beispielsweise in eine Antriebsregelung entsprechend eingegriffen werden.

Dadurch, dass eine Verformung des Koordinatenmessgeräts beim Positionieren des Tastkopfs zum Vermessen des Werkstücks gemessen wird, ist eine besonders genaue und vollständige Erfassung der Geometrieänderungen des Koordinatenmessgeräts möglich. Insbesondere wird dadurch, dass beim Messablauf zum Messen des zu messenden Werkstücks die Erfassung der Verformungen erfolgt und nicht nur bei einer vorhergehenden Messung eines Prüfkörpers oder bei einer bei der Inbetriebnahme des Koordinatenmessgeräts erfolgten Kalibrierung, eine Erfassung der bei der Werkstückmessung aktuell vorliegenden Geometrie bzw. der aktuellen Geometrieänderungen des Koordinatenmessgeräts ermöglicht.

Dadurch, dass der Antrieb der mindestens einen Achse des Koordinatenmessgeräts zur Kompensation der Abweichung der Ist- von der Sollposition des Tastkopfs angesteuert wird, wird die Sollposition des Tastkopfs mit einer größeren Genauigkeit tatsächlich erreicht. Somit wird eine Geometrieänderung des Koordinatenmessgeräts aktiv kompensiert und dadurch ausgeglichen. Dies bedeutet beispielsweise, dass trotz statischer und/oder dynamischer Verformungen des Koordinatenmessgeräts ein Messpunkt genauer angefahren wird, dass eine vorbestimmte Bahn beim Scannen nach Solldaten genauer abgefahren wird und dass eine vorgegebene Bahn von einem Messpunkt zum nächsten genauer eingehalten wird. Hierdurch kann insbesondere vermieden werden, dass der Messbereich eines messenden Tastkopfs überschritten wird oder ein berührender Taster sogar den Kontakt mit der Werkstückoberfläche verliert. Ferner wird die Gefahr von Kollisionen mit dem Werkstück verringert. Umgekehrt hat das erfindungsgemäße Verfahren auch den Vorteil, dass eine weniger steife Bauweise des Koordinatenmessgeräts ermöglicht wird, ohne dass die genannten Nachteile auftreten. Ferner können aufwändige Massnahmen zur Vermeidung von verschleiß- und/oder temperaturbedingten Verformungen entfallen. Dies ist ganz besonders beim Scannen nach Solldaten von Vorteil.

Insbesondere kann die aufgenommene Verformung eine dynamische Verformung des Koordinatenmessgeräts aufgrund der Bewegung des Koordinatenmessgeräts sein. Eine solche dynamische Verformung kann insbesondere abhängig von der Beschleunigung in der mindestens einen Achse sein, in der das Koordinatenmessgerät bewegt wird. Dabei können die Verformungen an einem beschleunigten Bauteil auftreten, also beispielsweise an einer Tragstruktur einer weiteren Achse, die an einem Schlitten angeordnet ist, der durch die Bewegung der mindestens einen Achse beschleunigt wird. Es ist aber auch möglich, dass durch die Rückwirkung der zur Beschleunigung aufgebrachten Kraft ein unbeschleunigtes Bauteil verformt wird. Dadurch, dass eine durch die Bewegung des Koordinatenmessgeräts verursachte dynamische Verformung des Koordinatenmessgeräts gemessen, eine hierdurch verursachte Abweichung einer Ist- von einer Sollposition des Tastkopfs ermittelt und ein Antrieb mindestens einer Achse des Koordinatenmessgeräts zur Kompensation der Abweichung angesteuert wird, erreicht der Tastkopf auch bei Auftreten dynamischer Verformungen mit einer höheren Genauigkeit seine Sollposition. Hierdurch wird auch eine Bauweise eines Koordinatenmessgeräts mit geringerer Steifigkeit und geringeren bewegten Massen und/oder eine höhere Dynamik ermöglicht.

Gemäß einer bevorzugten Ausführungsform des erfindungsgemäßen Verfahrens wird das Koordinatenmessgerät in einer ersten Achse angetrieben und die Verformung quer zur Richtung einer zweiten Achse, insbesondere in Richtung der ersten Achse, gemessen. Es wird daher diejenige Verformung, beispielsweise eine Verbiegung, gemessen, die eine Abweichung der Position des Tastkopfs in einer Richtung quer zur zweiten Achse bzw. in Richtung der ersten Achse zur Folge hat. Die der gemessenen Verformung zugeordnete Abweichung der Istposition von der Sollposition des Tastkopfs wird zumindest in Richtung der ersten Achse ermittelt und zumindest ein Antrieb der ersten Achse des Koordinatenmessgeräts derart angesteuert, dass die Sollposition mit höherer Genauigkeit erreicht wird. Hierdurch wird in der Regel bereits eine Kompensation der wesentlichen Komponente der Abweichung der Ist- von der Sollposition des Tastkopfs erzielt.

Bei einem Koordinatenmessgerät mit drei jeweils senkrecht zueinander stehenden Achsen kann aufgrund der Bewegung in einer ersten Achse auch eine Verformung in einer Richtung senkrecht zur Richtung der ersten Achse auftreten. In besonders vorteilhafter Weise kann daher auch ein Antrieb einer weiteren Achse, die senkrecht zur ersten Achse steht, zur Erreichung der Sollposition des Tastkopfs angesteuert werden. Hierdurch wird eine Steigerung der Genauigkeit erzielt, da der Tastkopf in mehreren Raumrichtungen genauer auf die Sollposition positioniert wird.

Die erste Achse, in der das Koordinatenmessgerät bei der Durchführung des erfindungsgemäßen Verfahrens angetrieben wird, kann jede Achse des Koordinatenmessgeräts sein, unabhängig vom kinematischen Aufbau des Koordinatenmessgeräts bzw. der Anordnung der Achsen. Insbesondere kann dies bei einem mit drei senkrecht aufeinander aufbauenden Achsen ausgebildeten Koordinatenmessgerät sowohl die kinematisch erste Achse sein, die an einer Grundstruktur des Koordinatenmessgeräts ansetzt, wie auch die kinematisch zweite Achse, die an einem Schlitten angeordnet ist, der durch die erste Achse in der Richtung der ersten Achse verfahrbar ist, als auch die kinematisch dritte Achse, die an einem Schlitten angeordnet ist, der durch die kinematisch zweite Achse verfahrbar ist und den Tastkopf trägt.

In bevorzugter Weise wird das erfindungsgemäße Verfahren für mehrere Achsen des Koordinatenmessgeräts durchgeführt, in besonders bevorzugter Weise für die drei Achsen eines mit drei kinematisch aufeinander aufbauenden Achsen ausgebildeten Dreikoordinatenmessgeräts. So kann beispielsweise bei Bewegung der Z-Achse die Verformung der Y-Achse in X- und Z-Richtung sowie der X-Achse in Y- und Z-Richtung gemessen werden und die entsprechende Abweichung der Istposition des Tastkopfs von der Sollposition in X-, Y- und Z-Richtung durch die Antriebe kompensiert werden. Eine entsprechende Kompensation kann auch bei Bewegung der Y-Achse und/oder der Z-Achse erfolgen. Hierdurch kann erreicht werden, dass die räumliche Sollposition des Tastkopfs mit besonders hoher Genauigkeit erreicht wird.

Weiterhin ist es erfindungsgemäß, dass der Zusammenhang zwischen der gemessenen Verformung und der dadurch verursachten Abweichung der Istposition von der Sollposition des Tastkopfs aufgrund einer vorangegangenen Kalibrierungsmessung ermittelt wird. Hierdurch kann die Tatsache ausgenutzt werden, dass, auch wenn sich die Verformung des Koordinatenmessgeräts beim aktuellen Messablauf von der bei einer vorangegangenen Kalibrierungsmessung unterscheidet, der Zusammenhang zwischen der gemessenen Verformung und der dadurch verursachten Abweichung der Istposition von der Sollposition des Tastkopfs durch die Kalibrierungsmessung in der Regel hinreichend genau bestimmt werden kann. Die Kalibrierungsmessung kann beispielsweise eine unter dynamischen Bedingungen durchgeführte Messung an einem Prüfkörper mit bekannten geometrischen Daten sein. Es ist aber beispielsweise auch denkbar, die betreffenden Verformungen durch Ausübung statischer Kräfte nachzubilden und die dadurch entstehenden Abweichungen der Position des Tastkopfs zu messen. Ferner kann ein rechnerisches Modell des Koordinatenmessgeräts, beispielsweise ein FEM-Modell, zur Ermittlung der Abweichungen aufgrund der Verformungen herangezogen werden. Im einfachsten Fall kann die Verformung in einer Weise gemessen werden, dass der Messwert der Verformung proportional zur Positionsabweichung ist. In diesem Fall entspricht der Zusammenhang zwischen der gemessenen Verformung und der Abweichung der Position des Tastkopfs einer einfachen Skalierung. Hierdurch wird eine Korrelation der Verformung des Koordinatenmessgeräts mit der Abweichung der Istposition von der Sollposition des Tastkopfs ermittelt; dieser Zusammenhang kann in einer Steuerungseinrichtung des Koordinatenmessgeräts gespeichert werden, beispielsweise in Form einer Tabelle, einer Matrix oder einer durch Parameter bestimmten Funktion. Bei einer Bewegung des Koordinatenmessgeräts zur Positionierung des Tastkopfs wird auf die gespeicherten Daten zugegriffen und aus der gemessenen Verformung auf eine entsprechende Abweichung der Ist- von der Sollposition des Tastkopfs geschlossen. Unter Berücksichtigung der Länge und der Orientierung des Tasters kann ebenso die Abweichung der Ist- von der Sollposition des Tasters ermittelt werden. Hierdurch wird auf einfache Weise eine Kompensation der Verformungen ermöglicht.

Zur Kompensation der Abweichung der Ist- von der Sollposition, d. h. zur genaueren Erreichung der Sollposition durch den Tastkopf bzw. den Taster, ist es vorteilhaft, dass der Antrieb einer Achse, die zur Positionierung des Tastkopfs bewegt wird, einen Positionsregelkreis bildet, in den eine Komponente der Abweichung eingekoppelt wird, insbesondere die ermittelte Abweichung in Richtung der betreffenden Achse. Insbesondere ist der Regelkreis des Antriebs über einen Positionsgeber der betreffenden Achse geschlossen, so dass eine Sollposition der Achse gemäß dem Signal des Positionsgebers angefahren wird. Derartige Regelungen sind an sich bekannt. In den Regelkreis kann ein mit der gemessenen Verformung korrelierter Abweichungswert beispielsweise direkt als Gegenkoppelwert eingekoppelt werden. Hierdurch kann auf besonders einfache Weise eine Kompensation der Abweichung der Ist- von der Sollposition erreicht werden. Ferner ermöglicht eine derartige Einkopplung in den Antriebsregelkreis eine Regelung mit einer hohen Frequenz, insbesondere mit einer Frequenz, die größer ist als die Frequenz der durch die Bewegung angeregten Eigenschwingungen des Koordinatenmessgeräts. Hierdurch können derartige Schwingungen wirksam gedämpft werden.

In erfindungsgemäßer Weise wird bei einer Positionierung des Tastkopfs relativ zu einem zu messenden Werkstück die Verformung des Koordinatenmessgeräts kontinuierlich gemessen, d.h. mit einer gegebenen Taktfrequenz. Insbesondere kann eine Messwertaufnahme zur Messung der Verformung in Echtzeit mit einer Frequenz erfolgen, die größer ist als mögliche Eigenfrequenzen des Koordinatenmessgeräts. So kann beispielsweise die Messwertaufnahme mit einer Frequenz von mindestens ca. 200 Hz erfolgen, während die Eigenfrequenzen der dominierenden mechanischen Schwingungen des Koordinatenmessgeräts in der Regel deutlich unterhalb dieser Frequenz liegen. Hierdurch erfolgt eine besonders vollständige Messwertaufnahme, durch die eine besonders weitgehende Kompensation der Abweichungen ermöglicht wird.

Erfindungsgemäß wird nur ein Anteil der gemessenen Abweichungen der Ist- von der Sollposition durch Ansteuerung der Antriebe des Koordinatenmessgeräts kompensiert. In der Regel ist die Dynamik eines Koordinatenmessgeräts begrenzt, wobei sowohl die Regelung selbst als auch die Steifigkeit des Antriebs sowie die Trägheit und die Steifigkeit der Achsen des Koordinatenmessgeräts eine Rolle spielt. Hierdurch kann auch die Möglichkeit, durch Einkopplung gemessener Abweichungen in einen oder mehrere Antriebsregelkreise solche Abweichungen zu minimieren, begrenzt sein. Dadurch, dass nur ein Anteil der Abweichungen kompensiert wird, kann die Entstehung von Instabilitäten oder Regelschwingungen sicher vermieden werden. Ein weiterer Anteil der gemessenen Abweichungen wird erfindungsgemäß rechnerisch korrigiert.

Erfindungsgemäß wird bei einer kontinuierlichen Aufnahme der Abweichungen der Ist- von der Sollposition, ein niederfrequenter Anteil durch Ansteuerung der Antriebe kompensiert, während ein höherfrequenter Anteil rechnerisch korrigiert wird. Hierfür kann beispielsweise eine Filterung des zeitlichen Verlaufs der gemessenen Abweichungen vorgenommen werden, so dass niederfrequente Anteile, beispielsweise Abweichungsanteile mit Frequenzen unterhalb von ca. 50 oder ca. 100 Hz, in den Positionsregelkreis des Antriebs der betreffenden Achse des Koordinatenmessgeräts bzw. in die Positionsregelkreise der Antriebe der betreffenden Achsen eingekoppelt werden. Höherfrequente Anteile der Abweichungen können einer rechnerischen Korrektur der gemessenen Koordinaten von Antastpunkten zugeführt werden. In entsprechender Weise kann auch eine Filterung nach Raumfrequenzen erfolgen; Anteile niedriger Raumfrequenzen, die beispielsweise einer groben Welligkeit mit einer Halb-, Einfach- oder Doppelwelle auf dem gesamten Verfahrweg einer Achse entsprechen, können durch Einkopplung in einen Positionsregelkreis kompensiert werden, während für Anteile höherer Raumfrequenzen, die beispielsweise einer Rauhigkeit oder einer kurzperiodischen Welligkeit entsprechen, eine rechnerische Korrektur erfolgen kann.

Auf diese Weise können solche Abweichungen der Ist- von der Sollposition vermieden werden, die auch bei einer begrenzten Dynamik des Antriebs bzw. der Antriebe des Koordinatenmessgeräts ausgeregelt werden können. Diese niederfrequenten Anteile weisen häufig eine größere Amplitude auf als die höherfrequenten Anteile. Durch Kompensation der niederfrequenten Anteile kann daher bereits in den meisten Fällen beispielsweise eine Überschreitung des Messbereichs des Tastkopfs vermieden werden. Insbesondere können hierdurch auch Abweichungen der Ist- von der Sollposition durch statische Geometriefehler vermieden werden; hierbei ist besonders vorteilhaft, dass die gemessenen Abweichungen den aktuellen Zustand des Koordinatenmessgeräts wiedergeben und damit auch die aktuellen statischen Geometriefehler, dies sich beispielsweise aufgrund von Abnutzungs- oder Temperatureffekten von denen bei vorangegangenen Messungen und insbesondere von denen bei der Inbetriebnahme des Koordinatenmessgeräts unterscheiden können. Die höherfrequenten Anteile der Abweichungen, die aufgrund einer begrenzten Dynamik des bzw. der betreffenden Regelkreise nicht oder nicht ausreichend kompensiert werden können, werden durch rechnerische Korrektur der gemessenen Antastkoordinaten korrigiert. Dies ist in den meisten Fällen ausreichend, weil die Beträge der höherfrequenten Abweichungen in der Regel deutlich geringer sind als die der niederfrequenten.

In vorteilhafter Weise kann es ferner vorgesehen sein, dass ein Anteil der Abweichungen der Ist- von der Sollposition, der auch trotz erfindungsgemäßer Ansteuerung des Antriebs bzw. der Antriebe verbleibt, rechnerisch korrigiert wird. So kann beispielsweise eine Grob-Kompensation durch Eingriff in den bzw. die Positionsregelkreise der Achse bzw. der Achsen erfolgen, während zumindest ein Teil der verbleibenden Abweichungen rechnerisch korrigiert wird. Hierdurch kann auf besonders einfache Weise beispielsweise eine Überschreitung des Messbereichs des Tastkopfs vermieden und eine besonders hohe Genauigkeit der korrigierten Koordinaten der angetasteten Messpunkte erreicht werden.

Gemäß einer besonders bevorzugten Ausführungsform des erfindungsgemäßen Verfahrens wird die Verformung durch mindestens einen Sensor gemessen, der einen Sender und einen positionsempfindlichen Empfänger umfasst, wobei Sender und Empfänger in Richtung der Achse voneinander beabstandet an einer Achse des Koordinatenmessgeräts angeordnet sind. Insbesondere erzeugt der Sender einen auf den Empfänger gerichteten Lichtstrahl, wobei der Begriff "Licht" hier wie im Folgenden auch infrarote (IR) und ultraviolette (UV) Strahlung umfasst. Der positionsempfindliche Empfänger erzeugt ein Signal, das abhängig vom Auftreffpunkt bzw. Auftreffbereich des Lichtstrahls auf dem Empfänger ist. Das Signal des Empfängers ist mit einer Verformung der Achse des Koordinatenmessgeräts korreliert und kann daher zur Messung der Verformung dienen. Hierdurch ist eine einfache und zuverlässige Messung der Verformung, insbesondere der dynamischen Verformung des Koordinatenmessgeräts möglich.

Dabei ist es besonders vorteilhaft, wenn der Lichtstrahl des Senders im Wesentlichen in Richtung der betreffenden Achse des Koordinatenmessgeräts emittiert wird und der Empfänger derart angeordnet ist, dass eine Abweichung eines Auftreffpunkts oder Auftreffbereichs des Lichtstrahls auf dem Empfänger quer zur Richtung der Achse gemessen wird. Der Empfänger kann insbesondere eine lichtempfindliche Fläche aufweisen, die quer zur Richtung der Achse angeordnet ist. Die Abweichung des Auftreffpunkts bzw. Auftreffbereichs des Lichtstrahls auf dem Empfänger gegenüber einer Ausgangslage entspricht dann einer Abweichung des betreffenden Bereichs der Achse quer zur Richtung der Achse und kann daher zur Messung der Verformung der Achse dienen.

Als Sender kommt insbesondere eine lichtemittierende Diode (LED) oder eine Laserdiode in Frage, die zur Erzielung einer abstandsunabhängig konstanten Querschnittsform des Lichtstrahls eine Kollimatoroptik aufweisen kann. Ein Sender in diesem Sinne kann auch beispielsweise der Ausgang eines Lichtleiters sein, durch den ein von einer externen Lichtquelle erzeugter Lichtstrahl zur betreffenden Achse des Koordinatenmessgeräts geleitet wird.

Als Empfänger kann in vorteilhafter Weise eine positionsempfindliche Diode (position-sensitive diode, PSD) verwendet werden. Diese ermöglicht in besonders einfacher und kostengünstiger Weise die Messung einer Querabweichung in zwei Dimensionen. Am Ausgang der PSD stehen beispielsweise zwei analoge Signale zur Verfügung, die den Abstand des Schwerpunkts einer auftreffenden Lichtverteilung von einem Mittelpunkt der PSD in zwei Richtungen angeben. Die analogen Signale können nach einer A/D-Wandlung weiter verarbeitet oder auch direkt in die Antriebsregler der Achsen des Koordinatenmessgeräts eingekoppelt werden. Die Helligkeitsinformation, die von der PSD ebenfalls zur Verfügung gestellt wird, kann zur Überprüfung der Zuverlässigkeit der Messung bzw. zur Erkennung von Störungen oder des Ausfalls des Senders verwendet werden. Als positionsempfindlicher Empfänger kann auch beispielsweise eine 4-Quadranten-Diode oder eine CCD-Kamera mit einer entsprechenden Auswertungseinheit zur Ermittlung einer Verschiebung des auftreffenden Lichtstrahls verwendet werden.

Gemäß einer Ausgestaltung der Erfindung sind der Sender und der positionsempfindliche Empfänger an dem gleichen Bauteil der betreffenden Achse des Koordinatenmessgeräts angeordnet, beispielsweise an einer Tragstruktur der Achse. Eine Veränderung des Auftreffpunkts des Lichtstrahls des an dem Bauteil befestigten Senders auf dem ebenfalls an dem Bauteil befestigten Empfänger zeigt daher unmittelbar eine Verformung des Bauteils an.

Gemäß einer weiteren Ausgestaltung der Erfindung sind der Sender und der Empfänger an unterschiedlichen, relativ zueinander beweglichen Bauteilen der Achse befestigt, beispielsweise der Sender an einem feststehenden und der Empfänger an einem beweglichen Bauteil der Achse oder umgekehrt. Hierdurch sind Verformungen beispielsweise der Führungen der Achse besonders genau messbar.

In vorteilhafter Weise ist der Sender oder der Empfänger im Bereich des Masseschwerpunkts eines beweglichen Bauteils, beispielsweise eines mit einer Achse des Koordinatenmessgeräts verschiebbaren Schlittens, angeordnet. Dies hat den Vorteil, dass eine Abweichung des Lichtstrahls auf dem Empfänger von einer Mittenposition direkt die für die Position des Tastkopfs relevante Verformung, insbesondere dynamische Verformung, des Bauteils angibt.

Ebenso vorteilhaft ist es, wenn der Sender oder der Empfänger im demjenigen Bereich eines beweglichen Bauteils angeordnet ist, der von der Führung der betreffenden Achse unterstützt wird. Auch in diesem Fall kann eine Abweichung des Auftreffbereichs des Lichtstrahls auf dem Empfänger direkt als ein Maß für die für den Tastkopf relevante Verformung des Bauteils dienen. Der Stützbereich kann auch mit dem Massenschwerpunkt des Bauteils zusammenfallen.

Weiterhin ist es vorteilhaft, wenn der Sender und/oder der Empfänger in einem Endbereich der Achse bzw. des betreffenden Bauteils der Achse angeordnet ist. Hierdurch wird ein besonders langer Lichtweg zwischen Sender und Empfänger erzielt, so dass das Signal des Empfängers Verformungen der Achse besonders empfindlich anzeigt. Dies gilt in besonderem Maße dann, wenn der Sender in einem Endbereich und der Empfänger in dem entgegengesetzten Endbereich der Achse angeordnet sind. Hierdurch ist eine Messung der Verformungen der Achse mit hoher Genauigkeit möglich. Ferner ist hierdurch eine direktere Messung der verformungsbedingten Positionsabweichung des Tastkopfs möglich; der Messwert der Verformung gibt daher besonders genau die Positionsabweichung an und kann ggf. unmittelbar oder nach einer Skalierung zur Kompensation der Abweichung in die Antriebe eingekoppelt werden.

Gemäß einer besonders bevorzugten Ausführungsform der Erfindung ist der Tastkopf an einer Halterung angeordnet, die mindestens einen weiteren Verstellantrieb umfasst, wodurch der Tastkopf relativ zur Halterung bewegt werden kann. Die Halterung ist insbesondere an einem Messarm des Koordinatenmessgeräts angeordnet. Der Verstellantrieb wird derart angesteuert, dass mindestens eine Komponente der Abweichung der Istposition von der Sollposition des Tastkopfs kompensiert wird.

Durch den Verstellantrieb wird daher nur den Tastkopf relativ zur Halterung bewegt. Die Halterung kann dabei derart ausgebildet sein, dass Bauelemente des Tastkopfs, die nicht unmittelbar dem Taster bzw. dem Sensor angehören, der Halterung zugeordnet sind und daher bei einer Bewegung des Tastkopfs relativ zur Halterung nicht mitbewegt werden, beispielsweise Einrichtungen zur Energieversorgung oder zum Wechseln des Tastkopfs. Hierdurch kann die durch den Verstellantrieb bewegte Masse weiter reduziert werden.

Da durch den Verstellantrieb nur eine relativ geringe Masse bewegt wird, kann hierdurch eine Bewegung mit einer besonders hohen Dynamik erzeugt werden. So kann beispielsweise die gemessene dynamische Verformung des Koordinatenmessgeräts in unterschiedliche Frequenzen zerlegt werden, wobei eine Komponente der Verformung, die eine relativ hohe Amplitude, jedoch eine niedrige Frequenz aufweist, von den Antrieben der Achsen des Koordinatenmessgeräts kompensiert wird, und eine Komponente der Verformung, die eine relativ geringe Amplitude und eine hohe Frequenz aufweist, durch den Verstellantrieb der Halterung des Tastkopfs kompensiert wird. Hierfür kann die entsprechende Komponente der Verformung in ähnlicher Weise wie bei den Achsenantrieben beschrieben in den Verstellantrieb eingekoppelt werden. In bevorzugter Weise weist bei einem Dreikoordinatenmessgerät der Verstellantrieb drei zueinander senkrecht stehende Achsen auf, wobei in jeder der drei Achsenrichtungen die Abweichung der Istposition des Tastkopfs von der Sollposition durch Ansteuerung des Verstellantriebs der Tastkopfhalterung kompensiert wird. Hierdurch ist eine besonders weitgehende Minimierung der Abweichungen der Istposition des Tastkopfs bzw. des Tasters von der Sollposition möglich, die auch bei hochdynamischen Messverfahren, etwa beim schnellen Scannen nach Solldaten, anwendbar ist.

Da für den Verstellantrieb in der Regel ein geringer Verstellbereich ausreichend ist, kann der Verstellantrieb in vorteilhafter Weise als piezoelektrischer Antrieb ausgebildet sein. Ein derartiger Antrieb hat die weiteren Vorteile einer hohen Steifigkeit, einer hohen Regelfrequenz und eines geringen Gewichts. Mit Hilfe eine piezoelektrischen Antriebs kann daher eine besonders hohe Dynamik des Koordinatenmessgeräts realisiert werden, ohne dass hohe Abweichungen der Istvon der Sollposition auftreten.

Ein erfindungsgemäßes Koordinatenmessgerät umfasst mindestens zwei, insbesondere drei motorisch angetriebene Achsen, die jeweils mindestens ein Positionsmesssystem, insbesondere einen Maßstab und einen Positionsgeber, und mindestens einen Antrieb umfassen. Ferner können die Achsen weitere Bauelemente, wie Führungen, Stützstrukturen oder auch Kabelführungen usw. umfassen. Dabei baut eine zweite Achse kinematisch auf einer ersten Achse auf, d.h. die zweite Achse ist einem Schlitten zugeordnet, der mit der ersten Achse bewegt werden kann. Ferner kann eine dritte Achse vorgesehen sein, die kinematisch auf der zweiten Achse aufbaut. Das Koordinatenmessgerät umfasst ferner einen Tastkopf, der an einem Messarm bzw. einem Ausleger derjenigen Achse angeordnet ist, die auf der bzw. den anderen Achsen kinematisch aufbaut und dadurch in zwei oder drei Raumrichtungen relativ zu einem Werkstück beweglich ist. Das Werkstück kann auf einer Grundstruktur des Koordinatenmessgeräts lagerbar sein. Der Tastkopf kann an einer Halterung mit einem Verstellantrieb angeordnet sein und ist zum Aufnehmen eines Tasters ausgebildet, der als mechanischer oder auch als optischer Taster ausgestaltet sein kann. Ferner weist das Koordinatenmessgerät eine Steuerungseinrichtung zur Ansteuerung der Achsen auf. Erfindungsgemäß ist das Koordinatenmessgerät zur Durchführung des oben beschriebenen Verfahrens ausgebildet. Die genauen Merkmale des erfindungsgemäßen Koordinatenmessgeräts sind im unabhängigen Anspruch 9 definiert. Hierdurch kann auf eine einfache und kostengünstige Weise ein Koordinatenmessgerät realisiert werden, das hohe Geschwindigkeiten zulässt, ohne dass der Tastkopf erheblich von einer Sollposition bzw. einer Sollbahn abweicht. Ein solches Koordinatenmessgerät kann auch in Leichtbauweise ausgeführt sein.

Gemäß einer Ausführungsform kann ein erfindungsgemäßes Koordinatenmessgerät zusätzlich zum Tastkopf mit einem Bearbeitungskopf zur Bearbeitung eines Werkstücks versehen werden. Dadurch, dass erfindungsgemäß dynamische Verformungen des Koordinatenmessgeräts aktiv kompensiert werden, können die Abweichungen einer IstPosition des Bearbeitungskopfs von einer Soll-Position minimiert und eine besonders genaue Bearbeitung des Werkstücks erzielt werden.

Weitere Aspekte der Erfindung ergeben sich aus der nachfolgenden Beschreibung eines bevorzugten Ausführungsbeispiels und der beigefügten Zeichnung. Es zeigen, jeweils in schematischer Darstellung:
Fig. 1 ein Koordinatenmessgerät;
Fig. 2 einen schematischen Längsschnitt durch die Y-Achse des Koordinatenmessgeräts gemäß Fig. 1;
Fig. 3 einen schematischen Längsschnitt durch die X-Achse des Koordinatenmessgeräts gemäß Fig. 1.

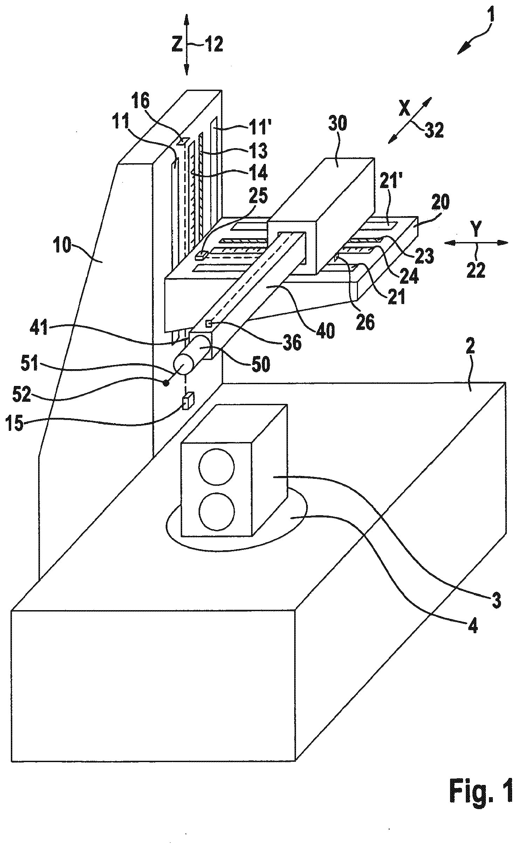

In Fig. 1 ist beispielhaft ein Koordinatenmessgerät gezeigt. Das Koordinatenmessgerät 1 umfasst eine Grundstruktur mit einem Tisch 2 zur Aufnahme eines Werkstücks 3 und mit einer feststehenden Säule 10. Der Tisch 2 kann einen Drehtisch 4 umfassen, auf dem das Werkstück 3 um eine senkrechte Achse drehbar gelagert ist. Das Werkstück 3 kann mit Hilfe von Spannmitteln auf dem Tisch 2 bzw. dem Drehtisch 4 festgespannt sein (nicht dargestellt).

Die Säule 10 trägt geradlinige Führungen 11, 11', an denen der Z-Schlitten 20 in senkrechter Richtung (Z) verschiebbar gelagert ist, wie in Fig. 1 durch den Pfeil 12 angedeutet. Die Führungen der Z-Achse, wie auch der anderen Achsen, können beispielsweise als Wälz- oder Gleitführung, mit Luftlagern oder mit einer hydrostatischen Lagerung ausgebildet sein. Der Z-Schlitten 20 wird durch einen Antrieb, beispielsweise durch eine Spindel 13, die eine am Z-Schlitten 20 angeordnete, nicht dargestellte Spindelmutter bewegt, angetrieben. Die Spindel 13 ist mit einem nicht dargestellten Motor verbunden. Anstelle des Spindelantriebs kann beispielsweise ein Linearantrieb vorgesehen sein, wobei etwa anstelle der Spindel 13 der Stator und am Z-Schlitten 20 der Forcer des Linearantriebs angeordnet sein kann (nicht dargestellt); dies gilt in entsprechender Weise für die übrigen Achsen. Ferner trägt die Säule 10 einen Maßstab 14, beispielsweise ein Metallband oder einen Glasmaßstab, auf den ein mit dem Z-Schlitten 20 verbundener Geber, beispielsweise ein optischer oder magnetischer Inkrementalgeber, zugreift (nicht dargestellt).

Am Z-Schlitten 20 sind geradlinige Führungen 21, 21' angeordnet, an denen der Y-Schlitten 30 in waagrechter Richtung (Y) verschiebbar gelagert ist, wie in Fig. 1 durch den Pfeil 22 angedeutet. Der Y-Schlitten 30 ist durch einen Antrieb motorisch in Y-Richtung verfahrbar, beispielsweise durch eine Spindel 23, die eine am Y-Schlitten 30 angeordnete, nicht dargestellte Spindelmutter bewegt. Die Spindel 23 wird durch einen nicht dargestellten Motor angetrieben. Weiterhin trägt der Z-Schlitten 20 einen Maßstab 24, der mit einem am Y-Schlitten 30 angeordneten Geber zusammenwirkt (nicht dargestellt).

Innerhalb des Y-Schlittens 30 ist ein horizontaler Arm 40 in einer waagrechten, zur Y-Richtung einen rechten Winkel bildenden Richtung (X) verschiebbar gelagert, wie in Fig. 1 durch den Pfeil 32 angedeutet. Führungen, Antrieb und Maßstab zur messbaren Verschiebung des Arms 40 sind in Fig. 1 nicht gezeigt. Der horizontale Arm 40 trägt an seinem vorderen Ende 41 den Tastkopf 50, der eine Aufnahme für einen Taster aufweist. In Fig. 1 ist als Taster symbolisch ein Taststift 51 mit einer Tastkugel 52 dargestellt; der Taster kann aber auch beispielsweise als optischer Sensor ausgebildet sein.

In dem in Fig. 1 gezeigten Ausführungsbeispiel ist die Z-Achse durch die Bauelemente zur Führung und Verschiebung des Z-Schlittens 20 realisiert, insbesondere durch die Führungen 11, 11', die Antriebsspindel 13 und den Maßstab 14 sowie durch die diese Elemente tragende Struktur der Säule 10. Die Y-Achse wird durch die Führungen 21, 21', die Antriebsspindel 23 und den Maßstab 24 sowie durch die diese Elemente tragende Struktur des Z-Schlittens 20 gebildet. Die X-Achse besteht aus dem Horizontalarm 40, den der Bewegung in X-Richtung zugeordneten weiteren Bauelementen, wie Führungen, Antrieb und Maßstab, und der entsprechenden Tragstruktur des Y-Schlittens 30. Bei dem in Fig. 1 beispielhaft gezeigten Koordinatenmessgerät baut die Y-Achse kinematisch auf der Z-Achse auf, und die X-Achse baut auf der Y-Achse auf.

Gemäß Fig. 1 ist an der Z-Säule 10 ein Sender 15, beispielsweise eine Laserdiode mit Kollimatoroptik, angeordnet, der einen kollimierten Lichtstrahl parallel zur Z-Richtung auf einen positionsempfindlichen Empfänger 16 richtet. Ein Sender 25 ist am Z-Schlitten 20 angebracht und richtet einen kollimierten Lichtstrahl parallel zur Y-Richtung auf einen am Y-Schlitten 30 angeordneten positionsempfindlichen Empfänger 26. Der Y-Schlitten 30 trägt ferner einen in Fig. 1 nicht dargestellten Sender, der einen Lichtstrahl parallel zur X-Achse auf einen in der Nähe des vorderen Endes 41 des horizontalen Arms 40 angebrachten positionsempfindlichen Empfänger 36 richtet. Die Lichtstrahlen sind jeweils durch gestrichelte Linien angedeutet.

Um den Tastkopf 50 und damit den Taster, beispielsweise den Taststift 51 mit der Tastkugel 52, relativ zum Werkstück 3 innerhalb eines Messvolumens zu positionieren, können die drei aufeinander aufbauenden Achsen des Koordinatenmessgeräts in X-, Y- bzw. Z-Richtung jeweils innerhalb eines gegebenen Bereichs verfahren werden. Dabei wird die Position des Tastkopfs aus den Signalen der Positionsgeber in den drei Achsen ermittelt. Die Position der Tastkugel 52 ergibt sich aus der Position des Tastkopfs 50 zusammen mit der bekannten Länge und Orientierung des Taststifts 51; Entsprechendes gilt für den Antastpunkt eines optischen Tasters. Mit Hilfe des Drehtischs 4 kann das Werkstück 3 derart ausgerichtet werden, dass Messpunkte an allen Seiten des Werkstücks 3 sowie beispielsweise innerhalb unterschiedlich gerichteter Bohrungen aufgenommen werden können; zu diesem Zweck kann auch der Tastkopf 50 mit einem oder mehreren Drehgelenken ausgerüstet sein.

Die aufgrund der Signale der Positionsgeber der Achsen ermittelte Position entspricht jedoch insbesondere bei einem dynamischen Betrieb des Koordinatenmessgeräts im Allgemeinen nicht der tatsächlichen Position zum selben Zeitpunkt. Wird zur Positionierung des Tastkopfs beispielsweise die Z-Achse des Koordinatenmessgeräts bewegt und der Z-Schlitten 20 in Z-Richtung beschleunigt, so wird aufgrund der Trägheitskräfte der horizontale Arm 40 verformt, so dass das freie vordere Ende 41 gegenüber dem Z-Schlitten 20 zunächst entgegen der Beschleunigungsrichtung ausgelenkt wird. Im weiteren Verlauf der Bewegung kann eine Schwingung auftreten, die auch zu einer Auslenkung in Bewegungsrichtung führen kann. Entsprechendes gilt beim Abbremsen der Bewegung in Z-Richtung. Insbesondere kann nach einer schnellen Bewegung von einem zum nächsten Antastpunkt auf dem Werkstück 3 noch eine Schwingung in Z-Richtung verbleiben; derartige dynamische Verformungen können auch beim Scannen entstehen. Aufgrund der Verformung entsteht eine Abweichung der tatsächlichen Position des Tastkopfs 50 bzw. der Tastkugel 52 in Z-Richtung von derjenigen, die aus den Positionsdaten des Gebers der Z-Achse berechnet wird. Wenn die Z-Achse in eine Position verfahren wird, die einer vorgegebenen Sollposition entspricht, ist der Tastkopf deshalb in diesem Fall nicht in der Sollposition.

Die dynamische Verformung des Arms 40 zeigt sich in einer Verschiebung des Auftreffpunkts des von dem der X-Achse zugeordneten Sender ausgestrahlten Lichtstrahls auf dem Empfänger 36. Diese Verschiebung ist durch das Signal des Empfängers 36 messbar. Die der gemessenen Verschiebung entsprechende Abweichung der Position der Tastkugel 52 von der Sollposition ist beispielsweise vom Anbringungsort des Empfängers 36 sowie von der Position der X-Achse und von der Länge des Taststifts 51 abhängig; diese Abhängigkeit kann vorab ermittelt werden. Aus dem Signal des Empfängers 36 kann dadurch zu jedem Zeitpunkt die Abweichung der Position in Z-Richtung von der aufgrund der Positionsgeber ermittelten Position bestimmt werden. Wird diese Abweichung zusammen mit dem Sollwert in einen Positionsregelkreis des Antriebs der Z-Achse eingekoppelt, so wird der Tastkopf 50 bzw. die Tastkugel 52 trotz dynamischer Verformung auf die Sollposition positioniert.

Bei einer Bewegung der Z-Achse kann ferner der Z-Schlitten 20 verformt werden, wodurch die tatsächliche Z-Position des Tastkopfs ebenfalls beeinflusst wird. Diese Verformung wird in entsprechender Weise durch den Empfänger 26 gemessen.

In analoger Weise entsteht eine Abweichung der Istposition des Tastkopfs in Y-Richtung von der durch den Y-Geber gemessenen Position durch eine beschleunigte Bewegung der Y-Achse. Auch diese Abweichung wird durch den Empfänger 36 gemessen und kann in ähnlicher Weise kompensiert werden.

Die Bewegungen der Achsen können auch Rückwirkungen auf die Grundstruktur des Koordinatenmessgeräts haben. Eine dynamische Verformung der Z-Achse, die ebenfalls die tatsächliche Position des Tastkopfs beeinflussen kann, kann aufgrund einer Verschiebung des Auftreffpunkts des durch den der Z-Achse zugeordneten Sender 15 erzeugten Lichtstrahls auf den Empfänger 16 gemessen werden.

Prinzipiell können neben beschleunigungsabhängigen auch geschwindigkeitsabhängige dynamische Verformungen auftreten, die beispielsweise durch die Wirkung der Antriebe auf reibungsbehaftete Führungen verursacht werden können. Die hierdurch verursachten Abweichungen sind jedoch in der Regel geringer als die durch die beschriebenen anderen dynamischen Verformungen verursachten. Wechselwirkungen zwischen den genannten Verformungen sind in der Regel gering und können vernachlässigt werden.

Darüber hinaus können statische Verformungen bzw. Geometrieänderungen, die von der Position aller Achsen abhängen, auftreten. Auch diese können in ähnlicher Weise durch die Empfänger 16, 26, 36 gemessen und zur Kompensation der entsprechenden Positionsabweichung des Tastkopfs in die Antriebe eingekoppelt werden.

Der Übersichtlichkeit halber sind in Fig. 1 Kabel und andere Versorgungsleitungen, weitere Gehäuse und Abdeckungen sowie die Steuerungseinrichtung des Koordinatenmessgeräts nicht dargestellt. Die Steuerungseinrichtung kann insbesondere elektrische und elektronische Baugruppen sowie Prozessoren zur Versorgung, Steuerung und Bedienung des Koordinatenmessgeräts enthalten.

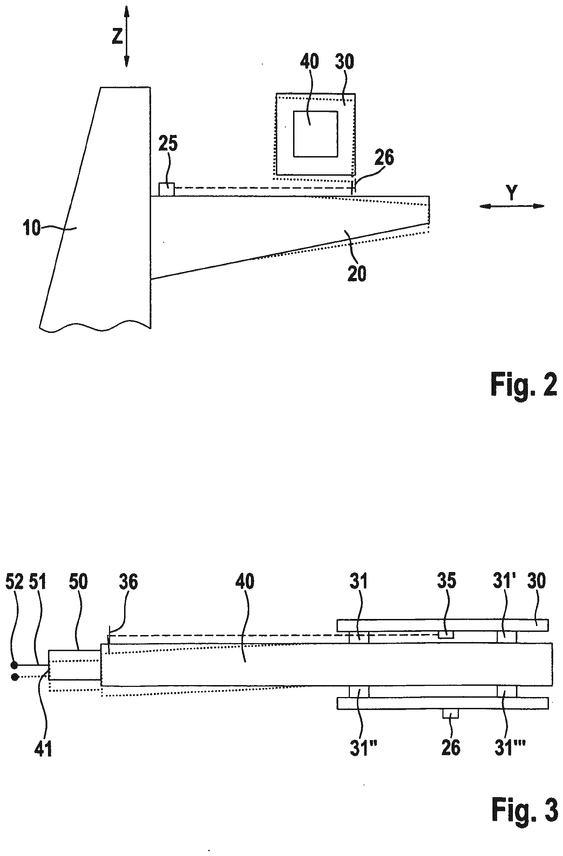

Zur Verdeutlichung der Anbringung von Sender und Empfänger ist in Fig. 2 ein Längsschnitt in Richtung der Y-Achse dargestellt. Am Z-Schlitten 20 ist in der Nähe der Z-Führung ein Sender 25 befestigt, der einen Lichtstrahl auf einen Empfänger 26 richtet, der an dem in Y-Richtung beweglichen Y-Schlitten 30 angebracht ist. Wie in Fig. 2 durch punktierte Linien angedeutet, führt eine Beschleunigung in Z-Richtung zu einer Verformung des Z-Schlittens 20 und somit zu einer Verschiebung des Auftreffpunkts des Lichtstrahls auf dem Empfänger 26 in Z-Richtung. Diese Verschiebung wird durch das Ausgangssignal des Empfängers 26 gemessen und zur Kompensation einer dadurch verursachten Abweichung des Tastkopfs 50 bzw. der Tastkugel 52 von einer Sollposition verwendet.

In Fig. 3 ist ein Längsschnitt in Richtung der X-Achse gezeigt. Innerhalb des Y-Schlittens 30 ist der horizontale Arm 40 mit Lagern 31, 31', 31", 31'" verschiebbar gelagert. Die Lager 31, 31', 31", 31'" können beispielsweise dem horizontalen Arm 40 zugeordnet sein und mit nicht dargestellten Führungen zusammenwirken. Der Arm 40 kann aber auch selbst Führungsflächen aufweisen, auf die beispielsweise eine Anzahl von Luftlagern wirken. Am Y-Schlitten 30 ist bevorzugt in der Nähe des Massenschwerpunkts ein Sender 35 angebracht, der einen Lichtstrahl in X-Richtung auf einen Empfänger 36 richtet. Wie in Fig. 3 durch punktierte Linien angedeutet, führt eine Beschleunigung in Z-Richtung zu einer Verformung des horizontalen Arms 40 und somit zu einer Verschiebung des Auftreffpunkts des Lichtstrahls auf dem Empfänger 36. Diese Verschiebung wird durch das Ausgangssignal des Empfängers 36 gemessen und zur Kompensation einer entsprechenden Positionsabweichung des Tastkopfs 50 bzw. der Tastkugel 52 verwendet. Je näher der Empfänger sich am vorderen Ende 41 des Arms 40 und damit am Tastkopf 50 befindet, umso genauer gibt die gemessene Verschiebung die Positionsabweichung des Tastkopfs 50 in der betreffenden Richtung wieder. Wie aus Fig. 3 ersichtlich, ist die Positionsabweichung der Tastkugel 52 zusätzlich von der Länge des Taststifts 51 abhängig. In Fig. 3 ist auch der der Y-Achse zugeordnete Empfänger 26 zu erkennen.

Entgegen der Darstellung in Fig. 1 und 3 können der Sender 35 und der Empfänger 36 beispielsweise unterhalb des horizontalen Arms 40 angeordnet sein. Abweichend von Fig. 3 kann der Sender 35 auch an dem horizontalen Arm 40 befestigt sein. Hierbei ist eine Anbringung in einem Bereich vorteilhaft, der nicht oder möglichst gering durch die Verformung beeinflusst wird, beispielsweise im Bereich zwischen den Lagern 31, 31', wenn diese an dem Arm 40 angeordnet sind. Auch in den anderen Achsen können Sender und Empfänger jeweils am gleichen oder an zueinander verschiebbaren Bauteilen angeordnet sein. In den Figuren 1 bis 3 können in einer oder mehreren Achsen die Positionen der jeweiligen Sender und Empfänger jeweils vertauscht sein.

Als Empfänger kann beispielsweise eine PSD mit einer lichtempfindlichen Fläche von ca. 10 x 10 mm und als Sender eine Laserdiode mit einer Leistung von ca. 1 mW verwendet werden. Die PSD gibt zwei analoge Spannungssignale ab, die die Position des Lichtstrahls in zwei Richtungen angeben, wobei 1 mV beispielsweise 1 µm entsprechen kann. Die Spannungssignale der PSD können beispielsweise mit einer Frequenz von 200 Hz erfasst werden. Die Spannungssignale können nach einer A/D-Wandlung weiterverarbeitet werden. Insbesondere kann es je nach Anordnung von Sender und Empfänger möglich sein, die digitalisierten Signale direkt als Offset in die Positionsregler der betreffenden Achsen einzugeben. Hierdurch kann eine besonders hohe Regelfrequenz von beispielsweise 5 kHz erreicht werden.

### Bezugszeichenliste

- 1: Koordinatenmessgerät
- 2: Tisch
- 3: Werkstück
- 4: Drehtisch
- 10: Säule
- 11, 11': Führung
- 12: Pfeil
- 13: Spindel
- 14: Maßstab
- 15: Sender
- 16: Empfänger
- 20: Z-Schlitten
- 21, 21': Führung
- 22: Pfeil
- 23: Spindel
- 24: Maßstab
- 25: Sender
- 26: Empfänger
- 30: Y-Schlitten
- 31, 31', 31", 31'": Lager
- 32: Pfeil
- 35: Sender
- 36: Empfänger
- 40: Arm
- 41: Ende
- 50: Tastkopf
- 51: Taststift
- 52: Tastkugel

## Patentansprüche

1. Verfahren zur Steuerung eines Koordinatenmessgeräts (1), das eine Mehrzahl zur Positionierung eines Tastkopfs (50) motorisch antreibbarer Achsen aufweist, beim Scannen nach Solldaten, wobei das Koordinatenmessgerät (1) in mindestens einer Achse zur Positionierung des Tastkopfs (50) relativ zu einem zu messenden Werkstück (3) bewegt wird, eine Verformung des Koordinatenmessgeräts kontinuierlich gemessen wird, eine durch die Verformung verursachte Abweichung einer Istposition von einer Sollposition ermittelt wird, wobei die durch die Verformung verursachte Abweichung der Istposition von der Sollposition des Tastkopfs (50) aufgrund einer vorangegangenen Kalibrierungsmessung ermittelt wird und zur Kompensation eines niederfrequenten Anteils der durch die Verformung verursachten Abweichung der Istposition von der Sollposition ein Antrieb der mindestens einen Achse des Koordinatenmessgeräts angesteuert wird und zur Korrektur eines höherfrequenten Anteils der Abweichung eine rechnerische Korrektur von gemessenen Koordinatenwerten von Messpunkten erfolgt.

2. Verfahren nach Anspruch 1, **dadurch gekennzeichnet, dass** die gemessene Verformung des Koordinatenmessgeräts (1) eine durch die Bewegung der mindestens einen Achse verursachte dynamische Verformung ist.

3. Verfahren nach Anspruch 1 oder 2, **dadurch gekennzeichnet, dass** das Koordinatenmessgerät in einer ersten Achse angetrieben wird, dass die Verformung in Richtung der ersten Achse gemessen wird, dass die Abweichung der Istposition von der Sollposition des Tastkopfs (50) in Richtung der ersten Achse ermittelt wird und dass ein Antrieb der ersten Achse des Koordinatenmessgeräts zur Kompensation der Abweichung angesteuert wird.

4. Verfahren nach einem der vorhergehenden Ansprüche, **dadurch gekennzeichnet, dass** der Antrieb der mindestens einen Achse mit einem Positionsgeber einen Positionsregelkreis bildet und dass eine Komponente der Abweichung in den Positionsregelkreis eingekoppelt wird.

## Claims

1. Method for controlling a coordinate measuring machine (1), which comprises a plurality of motor-drivable axes for positioning a probe (50), during scanning on the basis of target data, wherein the coordinate measuring machine (1) is moved in at least one axis for positioning the probe (50) in relation to a workpiece (3) to be measured, a deformation of the coordinate measuring machine is measured continuously, a deviation of an actual position from a target position, caused by the deformation, is determined, wherein the deviation of the actual position from the target position of the probe (50) caused by the deformation is determined due to a previous calibration measurement and a drive of the at least one axis of the coordinate measuring machine is activated to compensate for a low-frequency portion of the deviation of the actual position from the target position caused by the deformation and a calculated correction of measured coordinate values takes place for a computational correction of measured coordinate values of measurement points.

2. Method according to Claim 1, **characterized in that** the measured deformation of the coordinate measuring machine (1) is a dynamic deformation caused by the movement of the at least one axis.

3. Method according to Claim 1 or 2, **characterized in that** the coordinate measuring machine is driven in a first axis, **in that** the deformation in the direction of the first axis is measured, **in that** the deviation of the actual position from the target position of the probe (50) in the direction of the first axis is determined and **in that** a drive of the first axis of the coordinate measuring machine is activated to compensate for the deviation.

4. Method according to one of the preceding claims, **characterized in that,** along with a position encoder, the drive of the at least one axis forms a position control circuit and **in that** a component of the deviation is coupled into the position control circuit.

## Revendications

1. Procédé de commande d'un appareil de mesure de coordonnées (1), qui présente une multiplicité d'axes pouvant être entraînés par un moteur pour le positionnement d'une sonde (50), lors du balayage selon des données de consigne, dans lequel on déplace l'appareil de mesure de coordonnées (1) suivant au moins un axe pour le positionnement de la sonde (50) par rapport à une pièce à mesurer (3), on mesure une déformation de l'appareil de mesure de coordonnées de manière continuée, dans lequel l'écart entre la position réelle et la position cible de la sonde (50), causé par la déformation, est déterminé à partir d'une mesure d'étalonnage antérieure et on détermine un écart d'une position réelle par rapport à une position de consigne causé par la déformation et on commande pour la compensation d'une partie à basse fréquence de l'écart, provoqué par la déformation, de la position réelle par rapport à la position de consigne, un entraînement d'au moins un axe de l'appareil de mesure de coordonnées et, pour corriger une partie à plus haute fréquence de l'écart, on effectue une correction par calcul de valeurs de coordonnées mesurées de points de mesure..

2. Procédé selon la revendication 1, **caractérisé en ce que** la déformation mesurée de l'appareil de mesure de coordonnées (1) est une déformation dynamique causée par le mouvement dudit au moins un axe.

3. Procédé selon une revendication 1 ou 2, **caractérisé en ce que** l'on entraîne l'appareil de mesure de coordonnées suivant un premier axe, **en ce que** l'on mesure la déformation dans la direction du premier axe, **en ce que** l'on détermine l'écart de la position réelle par rapport à la position de consigne de la sonde (50) dans la direction du premier axe et **en ce que** l'on commande un entraînement du premier axe de l'appareil de mesure de coordonnées pour la compensation de l'écart.

4. Procédé selon l'une quelconque des revendications précédentes, **caractérisé en ce que** l'entraînement dudit au moins un axe forme avec un capteur de position un circuit de régulation de position et **en ce qu'**une composante de l'écart est introduite dans le circuit de régulation de position.
